(19) Europäisches Patentamt
European Patent Office
Office européen des brevets

(11) **EP 4 242 985 B1**

(12) **EUROPEAN PATENT SPECIFICATION**

(45) Date of publication and mention
of the grant of the patent:
**27.11.2024  Bulletin 2024/48**

(21) Application number: **22193055.5**

(22) Date of filing: **31.08.2022**

(51) International Patent Classification (IPC):
***G06V 20/00*** *(2022.01)*

(52) Cooperative Patent Classification (CPC):
**G06V 20/95**

(54) **INFORMATION PROCESSING APPARATUS, PROGRAM, AND INFORMATION PROCESSING METHOD**

INFORMATIONSVERARBEITUNGSVORRICHTUNG, PROGRAMM UND
INFORMATIONSVERARBEITUNGSVERFAHREN

APPAREIL DE TRAITEMENT D'INFORMATIONS, PROGRAMME ET PROCÉDÉ DE TRAITEMENT
D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.03.2022   JP 2022037351**

(43) Date of publication of application:
**13.09.2023   Bulletin 2023/37**

(73) Proprietor: **FUJIFILM Business Innovation Corp.
Minato-ku
Tokyo (JP)**

(72) Inventor: **HAYASHI, Eisaku
Yokohama-shi (JP)**

(74) Representative: **Haseltine Lake Kempner LLP
Bürkleinstrasse 10
80538 München (DE)**

(56) References cited:
**CN-A- 105 894 046       US-A1- 2007 115 499
US-A1- 2010 328 687**

**Description**

Background

(i) Technical Field

The present disclosure relates to an information processing apparatus, a program, and an information processing method.

(ii) Related Art

For example, Japanese Patent No. 6719723 describes a data acquisition apparatus that can prevent registration of feature data that is unsuitable for identity determination. This data acquisition apparatus includes an acquisition unit for acquiring feature data indicative of features distributed in a region of a predetermined size on an object to be registered from an image including the object and verification unit for verifying that reliability of the feature data acquired by the acquisition unit is equal to or higher than a predetermined reference value on the basis of a result of matching between a part of the feature data acquired by the acquisition unit and data acquired from a corresponding region of the feature data and a result of matching between a part of feature data acquired from a different object and data acquired from a corresponding region of the feature data acquired by the acquisition unit. US 2010/0328687 A1 discloses a registering apparatus including: a first image data acquiring unit that acquires first image data from a first region on a recording medium; a second image data acquiring unit that acquires second image data from a second region that includes the first region; a third image data acquiring unit that acquires third image data from a third region that does not include the first region and differs from the second region when a correlation value between the second image data and the first image data is equal to or greater than a predetermined first threshold value; and a registering unit that registers the first image data as registration data that are image data to be used in authentication of the recording medium when a correlation value between the third image data and the first image data is equal to or less than a second threshold value.

CN 105 894 046 A discloses a convolutional neural network training method, a system of image processing, and corresponding computer equipment.

US 2007/115499 A1 discloses a method of creating a tag, the method including: reading, over a first region of a surface of an individual piece, a characteristic having randomness distributed over the surface of the individual piece and converting image information indicative of the read characteristic of the first region into individual piece information peculiar to the individual piece; forming an individual piece information image indicative of the individual piece information on the surface of the individual piece while using a second region having a predetermined range including the first region as a non-image forming region; and creating the tag, which is to be affixed to an article, from the individual piece.

Summary

In a system such as a system for determining authenticity of an object, authenticity is determined by imaging a random pattern on a surface of an object and then comparing a registered image of the random pattern thus obtained and a comparison image.

In a case where an image is registered as a registered image, whether or not the target image is suitable as a registered image is determined by acquiring plural images of corresponding regions of plural different objects and comparing the plural images thus acquired. Accordingly, a lot of man-hours are required for registration of a registered image.

Accordingly, it is an object of the present disclosure to provide an information processing apparatus, a program, and an information processing method that can reduce man-hours for registration of a registered image in a case where an image showing a random pattern on a surface of an object to be registered is registered as a registered image, as compared with a case where plural images acquired from plural different objects are used.

The scope of the present invention is defined by the appended claims.

Brief Description of the Drawings

Exemplary embodiments of the present disclosure will be described in detail based on the following figures, wherein:

Fig. 1 is a diagram illustrating an example of a configuration of an authenticity determining system according to a first exemplary embodiment not being part of the present invention;
Fig. 2 is a block diagram illustrating an example of an electric configuration of an information processing apparatus according to the first exemplary embodiment;

Fig. 3 is a block diagram illustrating an example of a functional configuration of the information processing apparatus according to the first exemplary embodiment;

Fig. 4 is a view for explaining a method for acquiring a first region and a second region from an object surface image according to the first exemplary embodiment;

Fig. 5 is a flowchart illustrating an example of a flow of processing of an information processing program according to the first exemplary embodiment;

Fig. 6 illustrates an example of a surface state of a first region according to a second exemplary embodiment not being part of the present invention;

Fig. 7A illustrates a first region and a third region extracted from an object surface image, Fig. 7B illustrates region movement in the third region, and Fig. 7C illustrates specified plural fourth regions;

Fig. 8A illustrates a first region and a third region extracted from an object surface image, Fig. 8B illustrates region movement in the third region, and Fig. 8C illustrates specified plural second regions;

Fig. 9 is a view for explaining a method for acquiring a first region and a second region according to a seventh exemplary embodiment;

Fig. 10 illustrates an example of an image obtained by rotating an image according to the seventh exemplary embodiment;

Fig. 11 illustrates an example of an image obtained by mirroring an image according to the seventh exemplary embodiment; and

Fig. 12 illustrates an example of an image obtained by filtering an image according to the seventh exemplary embodiment.

Detailed Description

Exemplary embodiments of the technique of the present disclosure will be described in detail below with reference to the drawings. Note that constituent elements and processes that are identical in terms of operation, action, or function are given identical reference signs throughout the drawings, and repeated description thereof is omitted as suitable. The drawings merely schematically illustrate the technique of the present disclosure to such a degree that the technique of the present disclosure is fully understood. Therefore, the technique of the present disclosure is not limited to illustrated examples. Furthermore, in the present exemplary embodiment, description of constituent elements that are not directly related to the present disclosure and well-known constituent elements is omitted in some cases.

Although a case where authenticity is determined by using an image of a random pattern of an object is described below in the exemplary embodiments, a target of application is not limited to determination of authenticity and can be, for example, object recognition.

First Exemplary Embodiment (not part of the present invention)

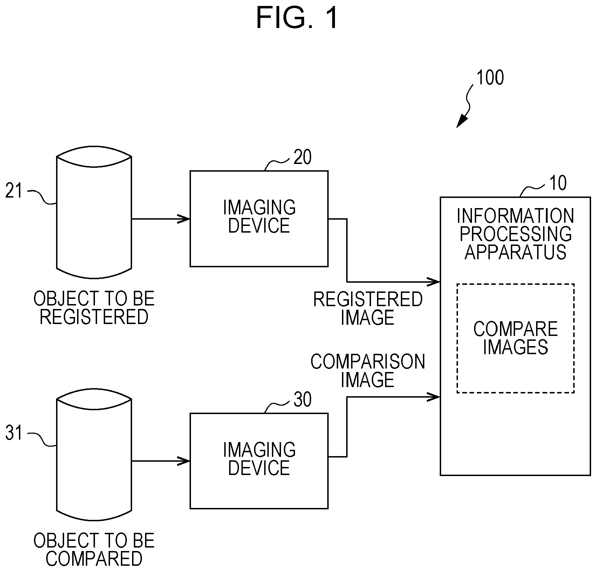

Fig. 1 is a diagram illustrating an example of a configuration of an authenticity determining system 100 according to a first exemplary embodiment.

As illustrated in Fig. 1, the authenticity determining system 100 according to the present exemplary embodiment registers in advance an image of a region (e.g., 10 mm square region) of a surface of an object as information unique to the object, compares an image of a target object with the registered image of the object, and uniquely determines that these objects are identical in a case where the compared images are similar. Note that determining whether or not a registered image and a comparison image are identical is referred to as authenticity determination.

As the information unique to the object, for example, a random pattern that is difficult to form under control, such as a distribution of plant fibers forming paper or a state of dispersion of metal fine particles contained in silver paint, is applied. The random pattern is a pattern on a surface of an object unique to the object and having fine irregular features that cannot be reproduced. The random pattern is, for example, observed from a surface of nonwoven fabric, paper, or carbon-filled black rubber, a surface of a ceramic for an integrated circuit (IC) package, a surface of an ultraviolet curable coating (lame coating) in which metal fine particles are dispersed, or the like. The random pattern is, for example, also observed from a surface of a stainless steel material that has been, for example, hair-line finished or sandblasted, a surface of a leather having random wrinkles in a natural state, or the like.

In the authenticity determining system 100, such a random pattern is optically read and is used as information. An image showing a fine random pattern is taken by using an imaging device such as a smartphone, a digital camera, or a scanner.

The authenticity determining system 100 illustrated in Fig. 1 includes an information processing apparatus 10, an imaging device 20, and an imaging device 30. The imaging device 20 images a random pattern on a surface of an object 21 to be registered. The imaging device 30 images a random pattern on a surface of an object 31 to be compared.

The information processing apparatus 10 causes an image showing the random pattern obtained by imaging the surface of the object 21 by the imaging device 20 to be registered as a registered image in a database (not illustrated) in advance. Meanwhile, the information processing apparatus 10 acquires, as a comparison image, an image showing the random pattern obtained by imaging the surface of the object 31 by the imaging device 30. The information processing apparatus 10 compares the comparison image whose authenticity is to be determined with the registered image registered in advance in the database. Specifically, the information processing apparatus 10 finds features of the registered image and features of the comparison image and calculates a similarity between the registered image and the comparison image from the features thus found. In a case where the similarity is equal to or higher than a certain value, the information processing apparatus 10 determines that the registered image and the comparison image are images read from an identical object, that is, the object 31 is identical to the object 21.

The authenticity determining system 100 is, for example, applied to a case where whether a security handled at a window of a financial institution is a genuine one (true object) legitimately printed or a false one (determination of authenticity of a security or the like) or a case where whether a pill prepared at a pharmacy is a genuine one (true object) legitimately produced or a false one (determination of authenticity of a pill).

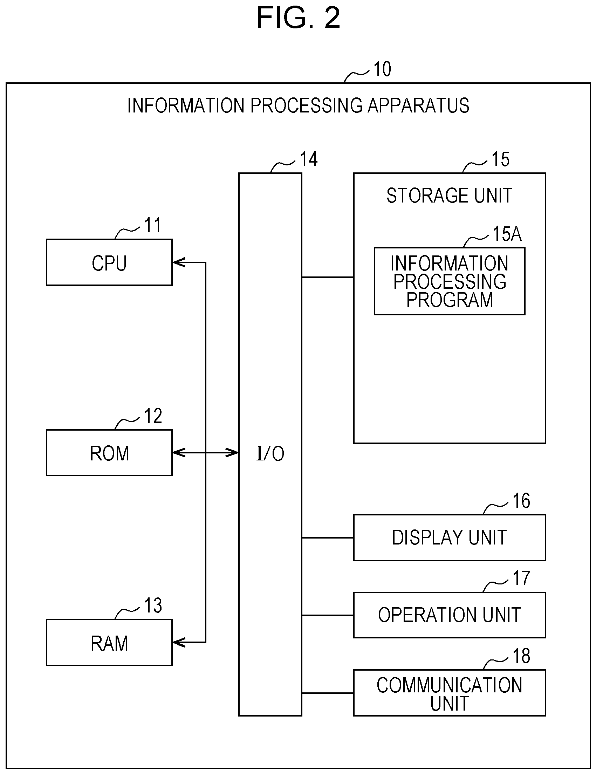

Fig. 2 is a block diagram illustrating an example of an electric configuration of the information processing apparatus 10 according to the first exemplary embodiment.

As illustrated in Fig. 2, the information processing apparatus 10 according to the present exemplary embodiment includes a central processing unit (CPU) 11, a read only memory (ROM) 12, a random access memory (RAM) 13, an input/output interface (I/O) 14, a storage unit 15, a display unit 16, an operation unit 17, and a communication unit 18.

As the information processing apparatus 10 according to the present exemplary embodiment, a general computer apparatus such as a server computer or a personal computer (PC) is applied, for example.

The CPU 11, the ROM 12, the RAM 13, and the I/O 14 are connected to one another through a bus. The I/O 14 is connected to functional units including the storage unit 15, the display unit 16, the operation unit 17, and the communication unit 18. These functional units are communicable with the CPU 11 via the I/O 14.

The CPU 11, the ROM 12, the RAM 13, and the I/O 14 constitute a controller. The controller may be configured as a sub controller that controls operation of a part of the information processing apparatus 10 or may be configured as a part of a main controller that controls operation of the whole information processing apparatus 10. As one or more of the blocks of the controller, an integrated circuit such as a large scale integration (LSI) or an integrated circuit (IC) chip set is used. Individual circuits may be used as the blocks or a circuit on which some or all of the blocks are integrated may be used. The blocks may be integral with one another or there may be a block that is separately provided. Furthermore, each of the blocks may have a part that is separately provided. Integration of the controller is not limited to LSI and may be realized by a dedicated circuit or a general-purpose processor.

As the storage unit 15, a hard disk drive (HDD), a solid state drive (SSD), a flash memory, or the like is used, for example. In the storage unit 15, an information processing program 15A for performing image registration processing according to the present exemplary embodiment is stored. Note that the information processing program 15A may be stored in the ROM 12.

The information processing program 15A may be, for example, installed in advance in the information processing apparatus 10. The information processing program 15A may be stored in a non-volatile recording medium or distributed over a network, and this information processing program 15A may be installed in the information processing apparatus 10 as suitable. Note that assumed examples of the non-volatile recording medium include a compact disc read only memory (CD-ROM), a magnetooptical disc, an HDD, a digital versatile disc read only memory (DVD-ROM), a flash memory, and a memory card.

As the display unit 16, a liquid crystal display (LCD), an organic EL (electro luminescence) display, or the like is used, for example. The display unit 16 may have a touch panel as a part thereof. As the operation unit 17, a device for entry of an operation such as a keyboard or a mouse is provided, for example. The display unit 16 and the operation unit 17 receive various kinds of instructions from a user of the information processing apparatus 10. The display unit 16 displays a result of processing performed in response to an instruction received from the user and various kinds of information such as a notification concerning processing.

The communication unit 18 is connected to the network such as the internet, a local area network (LAN), or a wide area network (WAN) and is communicable with an external device such as the imaging device 20, the imaging device 30, and an image forming apparatus over the network.

In a case where an image is registered as a registered image as described above, plural images are acquired by imaging corresponding regions of plural different objects, and it is determined whether or not a target image is suitable as a registered image is determined by comparing the acquired plural images. This requires a lot of man-hours for registration of a registered image.

The information processing apparatus 10 according to the present exemplary embodiment extracts a first region of a predetermined size showing a feature of the object 21 to be registered from an image of the object 21, specifies, from the image, a second region to be compared with the first region and having the same size as the first region, calculates a similarity between the first region and the second region, and registers an image of the first region as a registered image in a case where the similarity satisfies a predetermined standard.

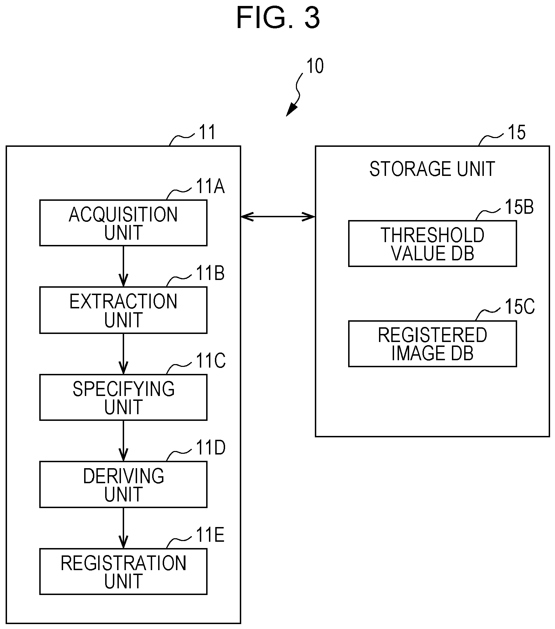

Specifically, the CPU 11 of the information processing apparatus 10 according to the present exemplary embodiment writes the information processing program 15A stored in the storage unit 15 into the RAM 13 and executes the information processing program 15A, and thus functions as the units illustrated in Fig. 3. Note that the CPU 11 is an example of a processor.

Fig. 3 is a block diagram illustrating an example of a functional configuration of the information processing apparatus 10 according to the first exemplary embodiment.

As illustrated in Fig. 3, the CPU 11 of the information processing apparatus 10 according to the present exemplary embodiment functions as an acquisition unit 11A, an extraction unit 11B, a specifying unit 11C, a deriving unit 11D, and a registration unit 11E.

In the storage unit 15 according to the present exemplary embodiment, a threshold value database (hereinafter referred to as a "threshold value DB") 15B and a registered image database (hereinafter referred to as a "registered image DB") 15C are stored. The threshold value DB 15B may be stored in an external storage device that can be accessed. In the threshold value DB 15B, various threshold values for determining whether or not to register, as a registered image, a region extracted from an image of the object 21 are registered. In the registered image DB 15C, a registered image is registered.

The acquisition unit 11A acquires an image (hereinafter referred to as an "object surface image") obtained by imaging a surface of the object 21 by the imaging device 20. The object surface image is an image showing a random pattern described above. Note that the imaging device 20 may image plural different positions of the object 21 or may image only a single position of the object 21. Only a single imaging device 20 may be provided or plural imaging devices 20 may be provided. The imaging device 20 may take plural images for a single imaging position. In a case where the imaging device 20 images plural different positions, plural images are acquired for each of the plural imaging positions.

The extraction unit 11B extracts a first region from the object surface image acquired by the acquisition unit 11A. The first region is a region of a predetermined size showing a feature of the object 21. For example, in a case where the first region is a rectangular region, the first region is a region that is 1 mm or more and 10 mm or less on a side. Note that a length of one side is not limited to 1 mm or more and 10 mm or less.

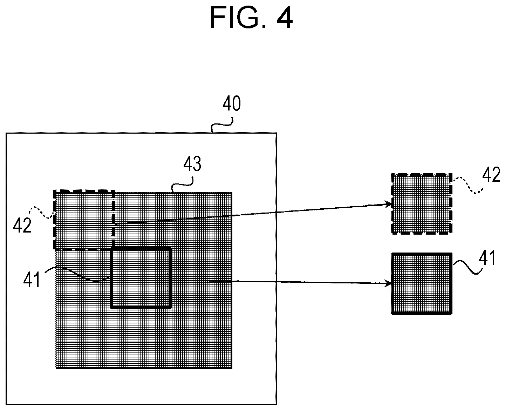

The specifying unit 11C specifies a second region from the object surface image acquired by the acquisition unit 11A. The second region is a region to be compared with the first region and having the same size as the first region. Note that a part of the second region may overlap a part of the first region. A specific method for acquiring the first region and the second region from the object surface image is described below with reference to Fig. 4.

Fig. 4 is a view for explaining a method for acquiring a first region 41 and a second region 42 from an object surface image 40 according to the first exemplary embodiment.

As illustrated in Fig. 4, the extraction unit 11B extracts a third region 43 from the object surface image 40. The third region 43 is a region including the first region 41 and having a larger size than the first region 41. The third region 43 has, for example, a size of 96 pixels × 96 pixels, and the first region 41 has, for example, a size of 32 pixels × 32 pixels. Note that the third region 43 may have a size of 64 pixels × 64 pixels, and the first region 41 may have a size of 32 pixels × 32 pixels.

The specifying unit 11C specifies, as the second region 42, at least a part of the third region 43 other than the first region 41. The second region 42 is a region located around the first region 41. A single second region 42 may be extracted or plural second regions 42 may be extracted. The second region 42 has the same size as the first region 41 and has, for example, a size of 32 pixels × 32 pixels.

The deriving unit 11D derives a similarity between the first region 41 and the second region 42. The similarity is, for example, expressed as a cross-correlation value between the first region 41 and the second region 42. A cross-correlation value $R_{NCC}$ is derived by using the following formula (1) where $f_n$ (n = 1 to N) is a pixel value of each pixel included in the first region 41, N (for example, N = 32 × 32 = 1024) is a total number of pixels of the first region 41, $g_n$ (n = 1 to N) is a pixel value of each pixel included in the second region 42, and N (for example, N = 32 × 32 = 1024) is a total number of pixels of the second region 42.

$$R_{NCC} = \frac{\Sigma f_n \times g_n}{\sqrt{\Sigma f_n^2 \times \Sigma g_n^2}} \qquad (1)$$

Furthermore, a cross-correlation value $R_{ZNCC}$ is derived by using the following formula (2) where $f_n$ (n = 1 to N) is a pixel value of each pixel included in the first region 41, N (for example, N = 32 × 32 = 1024) is a total number of pixels of the first region 41, $f_{AVE}$ is an average of the pixel values of the pixels included in the first region 41, $g_n$ (n = 1

to N) is a pixel value of each pixel included in the second region 42, N (for example, N = 32 × 32 = 1024) is a total number of pixels of the second region 42, and $g_{AVE}$ is an average of the pixel values of the pixels included in the second region 42.

$$R_{ZNCC} = \frac{\Sigma(f_n - f_{AVE})(g_n - g_{AVE})}{\sqrt{\Sigma(f_n - f_{AVE})^2 \Sigma(g_n - g_{AVE})^2}} \quad (2)$$

Either the cross-correlation value $R_{NCC}$ derived by the formula (1) or the cross-correlation value $R_{ZNCC}$ derived by the formula (2) may be employed as the similarity between the first region 41 and the second region 42. In a case where plural second regions 42 are extracted, this similarity is derived for each of the plural second regions 42.

The registration unit 11E registers, as a registered image, an image of the first region 41 in the registered image DB 15C in a case where the similarity derived by the deriving unit 11D satisfies a predetermined standard. Specifically, in a case where the similarity is equal to or less than a threshold value, the registration unit 11E registers the image of the first region 41 as a registered image. An appropriate value is set in advance as the threshold value concerning the similarity by a user (e.g., a system provider or a system designer) and is stored in the threshold value DB 15B. In the present exemplary embodiment, in a case where the first region 41 and the second region 42 located around the first region 41 that are obtained from the same object (the object 21) are not similar, it is regarded that randomness is high, and it is determined that the image of the first region 41 is suitable as a registered image. Note that in a case where plural second regions 42 are extracted, the registration unit 11E registers, as a registered image, the image of the first region 41 in a case where similarities between the first region 41 and the plural second regions 42 are equal to or less than the threshold value. Furthermore, an image of the second region 42 may be registered as a registered image in addition to the image of the first region 41. Furthermore, the image of the first region 41 may be acquired as a comparison image.

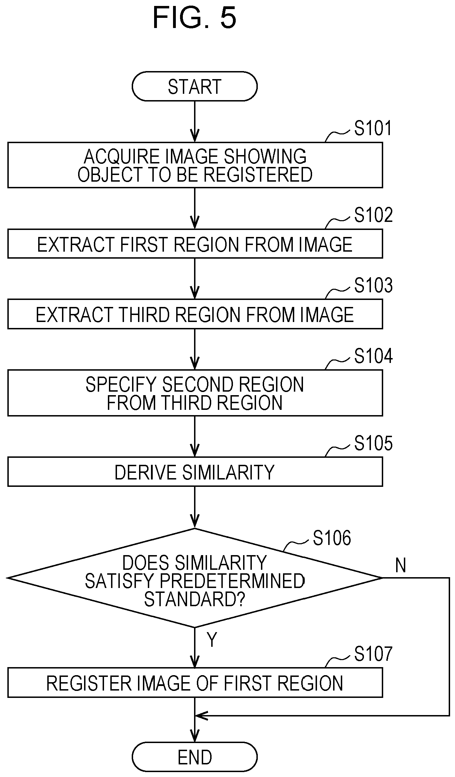

Next, operation of the information processing apparatus 10 according to the first exemplary embodiment is described with reference to Fig. 5.

Fig. 5 is a flowchart illustrating an example of a flow of processing of the information processing program 15A according to the first exemplary embodiment.

First, when the information processing apparatus 10 is instructed to perform image registration processing, the information processing program 15A is activated by the CPU 11, and the following steps are performed.

In step S101 of Fig. 5, for example, the CPU 11 acquires the object surface image 40 of the object 21 to be registered, as illustrated in Fig. 4.

In step S102, for example, the CPU 11 extracts the first region 41 from the object surface image 40 acquired in step S101, as illustrated in Fig. 4.

In step S103, for example, the CPU 11 extracts the third region 43 from the object surface image 40 acquired in step S101, as illustrated in Fig. 4. The third region 43 is a region including the first region 41 and having a larger size than the first region 41.

In step S104, for example, the CPU 11 specifies one or more second regions 42 from the third region 43 extracted in step S103, as illustrated in Fig. 4. The second region 42 is at least a part of the third region 43 other than the first region 41.

In step S105, the CPU 11 derives a similarity between the first region 41 extracted in step S102 and the second region 42 specified in step S104. The similarity is, for example, derived as a cross-correlation value by using either the formula (1) or the formula (2).

In step S106, the CPU 11 determines whether or not the similarity derived in step S105 satisfies a predetermined standard, that is, whether or not the similarity derived in step S105 is equal to or less than a threshold value. In a case where the CPU 11 determines that the similarity is equal to or less than the threshold value (a positive result is obtained), it is regarded that the image of the first region 41 is suitable as a registered image, and step S107 is performed. On the other hand, in a case where the CPU 11 determines that the similarity is larger than the threshold value (a negative result is obtained), it is regarded that the image of the first region 41 is not suitable as a registered image, and the series of processing of the information processing program 15A are finished.

In step S107, the CPU 11 registers, as a registered image, the image of the first region 41 in the registered image DB 15C, and the series of processing of the information processing program 15A are finished.

As described above, according to the present exemplary embodiment, a registered image is registered by using plural images of a single object. Accordingly, man-hours related to registration of a registered image are reduced as compared with a case where plural images of plural different objects are used.

Furthermore, not only suitability of a first region to be registered as a registered image, but also suitability of another region (a second region around the first region) as a registered image can be verified.

Second Exemplary Embodiment (not part of the present invention)

In the first exemplary embodiment, suitability as a registered image is verified by using a similarity between a first region and a second region. In the second exemplary embodiment, suitability as a registered image is verified by using a data characteristic of the first region in addition to the similarity.

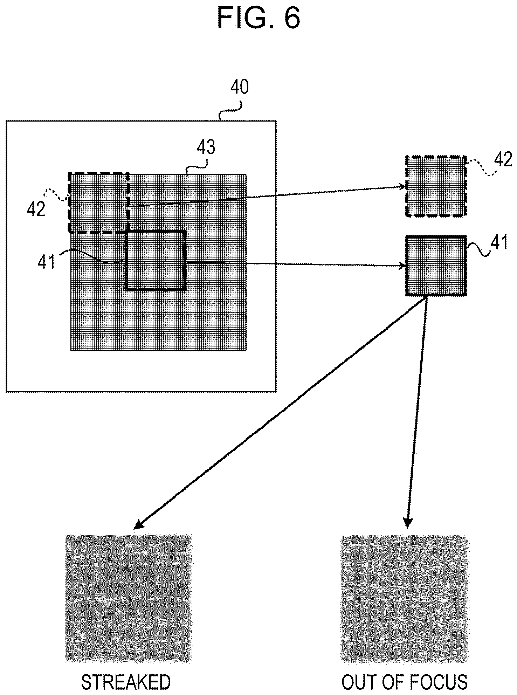

Fig. 6 illustrates an example of a surface state of a first region 41 according to the second exemplary embodiment. In the example of Fig. 6, a state where the surface of the first region 41 is "streaked" and a state where the surface of the first region 41 is "out of focus" are illustrated. Since an image including an out-of-focus part, a streak, a scratch, dust, or the like is unsuitable as a registered image, it is desirable to eliminate such an unsuitable image.

A CPU 11 of an information processing apparatus (hereinafter referred to as an "information processing apparatus 10A") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10A according to the present exemplary embodiment from the information processing apparatus 10 according to the first exemplary embodiment are described below.

The deriving unit 11D derives a similarity between the first region 41 and a second region 42 and further derives a characteristic value indicative of a characteristic of the first region 41 from the first region 41.

The registration unit 11E registers, as a registered image, an image of the first region 41 in a registered image DB 15C in a case where the similarity between the first region 41 and the second region 42 is equal to or less than a threshold value and the characteristic value of the first region 41 satisfies a predetermined condition. Specifically, the characteristic value is, for example, a compression rate, sharpness, a brightness distribution, a Hamming distance, or the like. The compression rate is a rate of decrease of a compressed image from an original image. Since an image of a relatively high compression rate tends to have low resolution, it is desirable to exclude such an image. In this case, in a case where the similarity is equal to or less than the threshold value and the compression rate of the first region 41 is equal to or less than a threshold value, the image of the first region 41 is registered as a registered image. The image of the first region 41 may be acquired as a comparison image. Note that the threshold value concerning the compression rate is stored in advance in a threshold value DB 15B.

The sharpness is one kind of index indicative of clarity of an image. Specifically, for example, dispersion (hereinafter referred to as Laplacian dispersion $\sigma$) of a contour image extracted from an image is found by using a Laplacian operator V and a Laplacian filter L expressed by the formula (3) below. The Laplacian dispersion $\sigma$ is an index indicative of a degree of dispersion of pixel values. Note that the Laplacian filter L is a filter for extracting a contour from an image by using secondary differentiation.

$$\nabla^2 = \frac{\partial^2}{\partial x^2} + \frac{\partial^2}{\partial y^2} \quad L = \begin{bmatrix} 0 & 1 & 0 \\ 1 & -4 & 1 \\ 0 & 1 & 0 \end{bmatrix} \quad (3)$$

Since an image of relatively low sharpness (e.g., Laplacian dispersion $\sigma$) tends to be an out-of-focus image, it is desirable to exclude such an image. In this case, in a case where the similarity is equal to or less than the threshold value and the sharpness of the first region 41 is equal to or more than a threshold value, the image of the first region 41 is registered as a registered image. Note that the threshold value concerning the sharpness is stored in advance in the threshold value DB 15B.

The brightness distribution is an index indicative of a distribution of brightness of an image. Specifically, kurtosis and skewness of an image are found. The kurtosis is an index indicative of sharpness of a distribution of pixel values, and the skewness is an index indicative of a degree of distortion of a distribution of pixel values. For example, skewness D is found by the following formula (4) where n is the number of pixels of an image, $x_i$ (i = 0, 1, 2, 3, ..., and n) is a pixel value, x- (- is directly above x) is an average of the pixel values, and s is a standard deviation.

$$D = \frac{n}{(n-1)(n-2)} \sum_{i=1}^{n} \left( \frac{x_i - \bar{x}}{s} \right)^3 \quad (4)$$

Since an image of relatively large skewness tends to be an image including a streak, a scratch, dust, or the like, it is desirable to exclude such an image. In this case, in a case where the similarity is equal to or less than the threshold value and skewness of the first region 41 is equal to or less than a threshold value, the image of the first region 41 is registered as a registered image. The threshold value concerning the skewness is stored in advance in the threshold value DB 15B.

The Hamming distance is the number of bits (digits) at which corresponding values (0 or 1) of two images are different. A Hamming distance between two images is derived. Since an image having a relatively small Hamming distance from another image tends to be similar to the other image, it is desirable to exclude such an image. In this case, in a case where the similarity is equal to or less than the threshold value and a Hamming distance between the first region 41 and the second region 42 is equal to or more than a threshold value, the image of the first region 41 is registered as a registered image. The threshold value concerning the Hamming distance is stored in advance in the threshold value DB 15B.

Note that in a case where plural second regions 42 are extracted, the image of the first region 41 is registered as a registered image in a case where similarities to the plural second regions 42 are equal to or less than the threshold value and the characteristic value satisfies a predetermined condition.

As described above, according to the present exemplary embodiment, an unsuitable image including an out-of-focus part, a streak, a scratch, dust, or the like among images regarded as being suitable as a registered image by using a similarity can be excluded.

Third Exemplary Embodiment

In a third exemplary embodiment, suitability as a registered image is verified by using features indicative of a degree of distribution of similarities in addition to a similarity.

A CPU 11 of an information processing apparatus (hereinafter referred to as an "information processing apparatus 10B") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10B according to the present exemplary embodiment from the information processing apparatus 10 according to the first exemplary embodiment are described below.

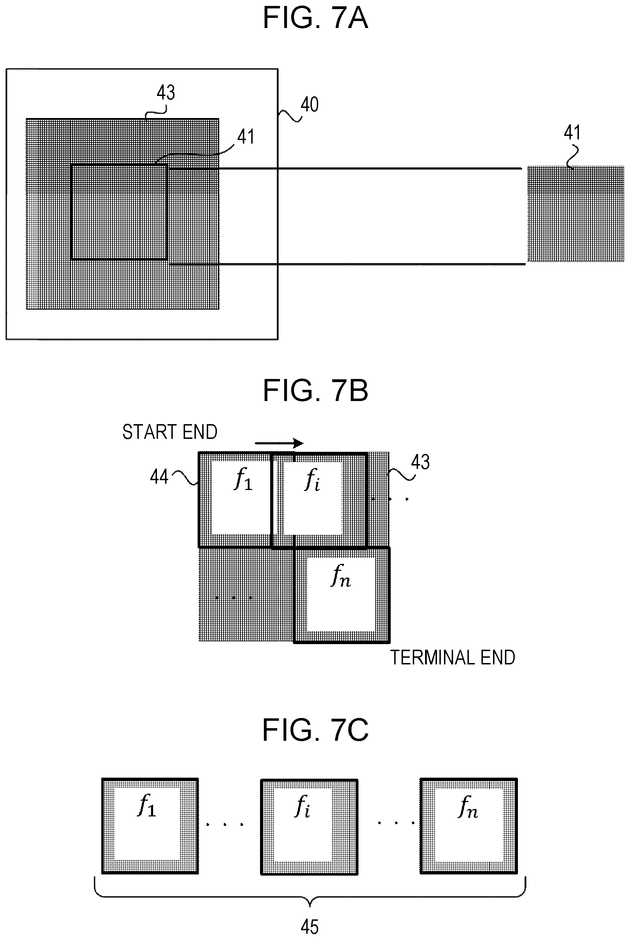

Figs. 7A to 7C are views for explaining a method for deriving features indicative of a degree of distribution of similarities according to the third exemplary embodiment. Fig. 7A illustrates a first region 41 and a third region 43 extracted from an object surface image 40, Fig. 7C illustrates region movement in the third region 43, and Fig. 7C illustrates specified plural fourth regions 45.

As illustrated in Fig. 7A, the extraction unit 11B extracts the third region 43 and the first region 41 from the object surface image 40. As illustrated in Fig. 7B, the specifying unit 11C shifts a region 44 having the same size as the first region 41 in the third region 43 by one pixel at each time in a predetermined direction (a direction from left to right in the example of Fig. 7B) from a start end of the third region 43 until the region 44 moves to a terminal end of the third region 43. As illustrated in Fig. 7C, plural regions 44 thus obtained are specified as plural fourth regions 45. In the example of Fig. 7C, the plural fourth regions 45 are expressed as n regions $f_1$, ... $f_i$, ..., and $f_n$. Note that the fourth regions 45 may be different from a second region 42 or any one of the plural fourth regions 45 may be identical to the second region 42.

The deriving unit 11D derives plural similarities between the first region 41 and the plural fourth regions 45 and derives features indicative of a degree of distribution of the similarities obtained for a maximum similarity among the plural similarities thus derived. Specifically, for example, a cross-correlation value derived by using the formula (1) or the formula (2) described above is used as a similarity. In a case where the number of fourth regions 45 is n, n cross-correlation values are obtained. As the features, a normalized score indicative of a degree of distribution of cross-correlation values obtained for a maximum cross-correlation value is used, for example. The normalized score is an index indicative of how far the value is away from a population average. That is, a normalized score of the maximum cross-correlation value is an index indicative of how far the maximum cross-correlation value is away from an average of the cross-correlation values. It can be said that a higher normalized score indicates higher randomness.

A normalized score $NS_i$ is derived by using the following formula (5) where $R_i$ is a maximum cross-correlation value, R- (- is directly above R) is an average of cross-correlation values, and $\sigma$ is a standard deviation of the cross-correlation values.

$$NS_i = (R_i - \overline{R})/\sigma \quad (5)$$

The registration unit 11E registers, as a registered image, an image of the first region 41 in a registered image DB 15C in a case where a similarity between the first region 41 and the second region 42 is equal to or less than a threshold value and features (e.g., a normalized score) are equal to or more than a certain value. The image of the first region 41 may be acquired as a comparison image. Note that the certain value (threshold value) concerning the features is stored in advance in the threshold value DB 15B.

As described above, according to the present exemplary embodiment, a more suitable image of higher randomness among images regarded as being suitable as a registered image by using a similarity can be obtained as a registered image.

Fourth Exemplary Embodiment

In a fourth exemplary embodiment, suitability as a registered image is verified by using a data characteristic of a first region and features indicative of a degree of distribution of similarities in addition to a similarity.

A CPU 11 of an information processing apparatus (hereinafter referred to as an "information processing apparatus 10C") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10C according to the present exemplary embodiment from the information processing apparatus 10 according to the first exemplary embodiment are described below.

As illustrated in Fig. 7A, the extraction unit 11B extracts a third region 43 and a first region 41 from an object surface image 40. As illustrated in Fig. 7B, the specifying unit 11C shifts a region 44 having the same size as the first region 41 in the third region 43 by one pixel at each time in a predetermined direction (a direction from left to right in the example of Fig. 7B) from a start end of the third region 43 until the region 44 moves to a terminal end of the third region 43. As illustrated in Fig. 7C, plural regions 44 thus obtained are specified as the plural fourth regions 45. In the example of Fig. 7C, the plural fourth regions 45 are expressed as n regions $f_1$, ... $f_i$, ..., and $f_n$.

The deriving unit 11D derives plural similarities between the first region 41 and the plural fourth regions 45 and derives features indicative of a degree of distribution of the similarities obtained for a maximum similarity among the plural similarities thus derived. Specifically, for example, a cross-correlation value derived by using the formula (1) or the formula (2) described above is used as a similarity. In a case where the number of fourth regions 45 is n, n cross-correlation values are obtained. As the features, a normalized score derived by using the formula (5) described above is used, for example. The deriving unit 11D derives, for example, a characteristic value indicative of a characteristic of the first region 41 from the first region 41 by using the formula (3) or the formula (4) described above.

The registration unit 11E registers, as a registered image, an image of the first region 41 in a registered image DB 15C in a case where a similarity between the first region 41 and the second region 42 is equal to or less than a threshold value, the features (e.g., a normalized score) are equal to or more than a certain value, and the characteristic value (e.g., a compression rate, Laplacian dispersion, or skewness) of the first region 41 satisfies a predetermined condition. The image of the first region 41 may be acquired as a comparison image.

As described above, according to the present exemplary embodiment, an unsuitable image including an out-of-focus part, a streak, a scratch, dust, or the like among images regarded as being suitable as a registered image by using a similarity can be excluded, and a more suitable image of higher randomness can be obtained as a registered image.

Fifth Exemplary Embodiment

In a fifth exemplary embodiment, suitability as a registered image is verified by using only features indicative of a degree of distribution of similarities.

A CPU 11 of an information processing apparatus (hereinafter referred to as an "information processing apparatus 10D") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10D according to the present exemplary embodiment from the information processing apparatus 10 according to the first exemplary embodiment are described below.

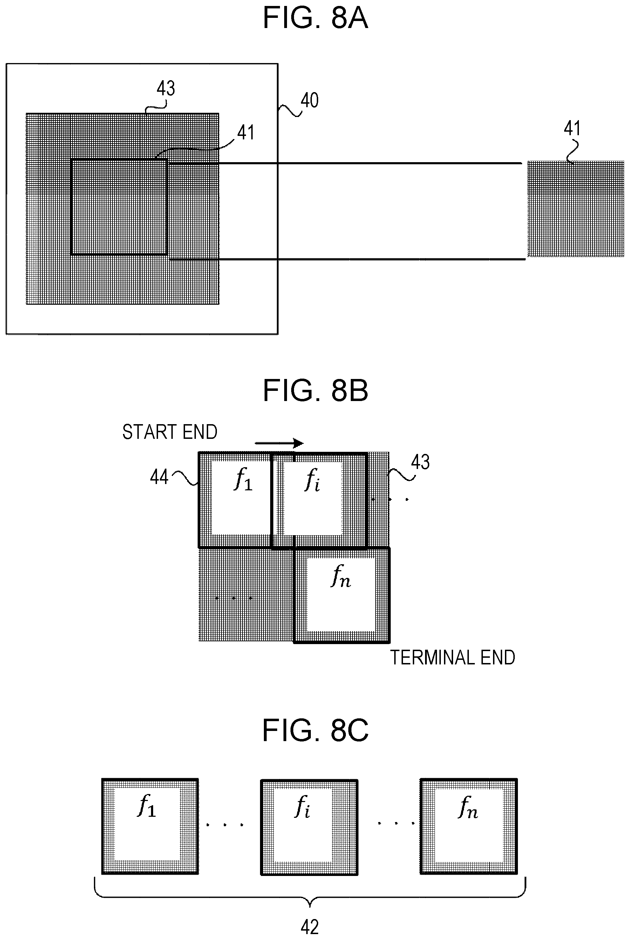

Figs. 8A to 8C are views for explaining a method for deriving features indicative of a degree of distribution of similarities according to the fifth exemplary embodiment. Fig. 8A illustrates a first region 41 and a third region 43 extracted from an object surface image 40, Fig. 8B illustrates region movement in the third region 43, and Fig. 8C illustrates specified plural second regions 42.

As illustrated in Fig. 8A, the extraction unit 11B extracts the third region 43 and the first region 41 from the object surface image 40. As illustrated in Fig. 8B, the specifying unit 11C shifts a region 44 having the same size as the first region 41 in the third region 43 by one pixel at each time in a predetermined direction (a direction from left to right in the example of Fig. 8B) from a start end of the third region 43 until the region 44 moves to a terminal end of the third region 43. As illustrated in Fig. 8C, plural regions 44 thus obtained are specified as the plural second regions 42. In the example of Fig. 8C, the plural second regions 42 are expressed as n regions $f_1$, ... $f_i$, ..., and $f_n$.

The deriving unit 11D derives plural similarities between the first region 41 and the plural second regions 42 and derives features indicative of a degree of distribution of the similarities obtained for a maximum similarity among the plural similarities thus derived. Specifically, for example, a cross-correlation value derived by using the formula (1) or the formula (2) described above is used as a similarity. In a case where the number of second regions 42 is n, n cross-correlation values are obtained. As the features, a normalized score derived by using the formula (5) described above is used, for example.

The registration unit 11E registers, as a registered image, an image of the first region 41 in a registered image DB 15C in a case where the features (e.g., a normalized score) are equal to or more than a certain value. The image of the first region 41 may be acquired as a comparison image. In the present exemplary embodiment, whether or not to register an image is determined by using only features (e.g., a normalized score) obtained from a similarity without using a similarity itself to determine whether or not to register an image.

As described above, according to the present exemplary embodiment, suitability as a registered image is verified by using only features obtained from a similarity. It is therefore possible to obtain a suitable image having high randomness as a registered image.

Sixth Exemplary Embodiment

In a sixth exemplary embodiment, suitability as a registered image is verified by using features indicative of a degree of distribution of similarities and a data characteristic of a first region.

A CPU 11 of an information processing apparatus (hereinafter referred to as an "information processing apparatus 10E") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10E according to the present exemplary embodiment from the information processing apparatus 10 according to the first exemplary embodiment are described below.

The deriving unit 11D derives plural similarities between a first region 41 and plural second regions 42 and derives features indicative of a degree of distribution of the similarities obtained for a maximum similarity among the plural similarities thus derived. Specifically, for example, a cross-correlation value derived by using the formula (1) or the formula (2) described above is used as a similarity. In a case where the number of second regions 42 is n, n cross-correlation values are obtained. As the features, a normalized score derived by using the formula (5) described above is used, for example. The deriving unit 11D derives a characteristic value indicative of a characteristic of the first region 41 from the first region 41, for example, by using the formula (3) or the formula (4) described above.

The registration unit 11E registers, as a registered image, an image of the first region 41 in a registered image DB 15C in a case where the features (e.g., a normalized score) are equal to or more than a certain value and the characteristic value (e.g., a compression rate, Laplacian dispersion, or skewness) of the first region 41 satisfies a predetermined condition. The image of the first region 41 may be acquired as a comparison image. In the present exemplary embodiment, whether or not to register an image is determined by using features (e.g., a normalized score) obtained from a similarity and a data characteristic of the first region 41 without using a similarity itself to determine whether or not to register an image.

As described above, according to the present exemplary embodiment, suitability as a registered image is verified by using features obtained from a degree of distribution of similarities and a data characteristic of a first region. Accordingly, an unsuitable image including an out-of-focus part, a streak, a scratch, dust, or the like can be excluded, and a suitable image of higher randomness can be obtained as a registered image.

Seventh Exemplary Embodiment

In a seventh exemplary embodiment, suitability as a registered image is verified by using a similarity between a first region and a second region obtained by adding predetermined distortion to the first region.

A CPU 11 of an information processing apparatus (hereinafter referred to as an "information processing apparatus 10F") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10F according to the present exemplary embodiment from the information processing apparatus 10 according to the first exemplary embodiment are described below.

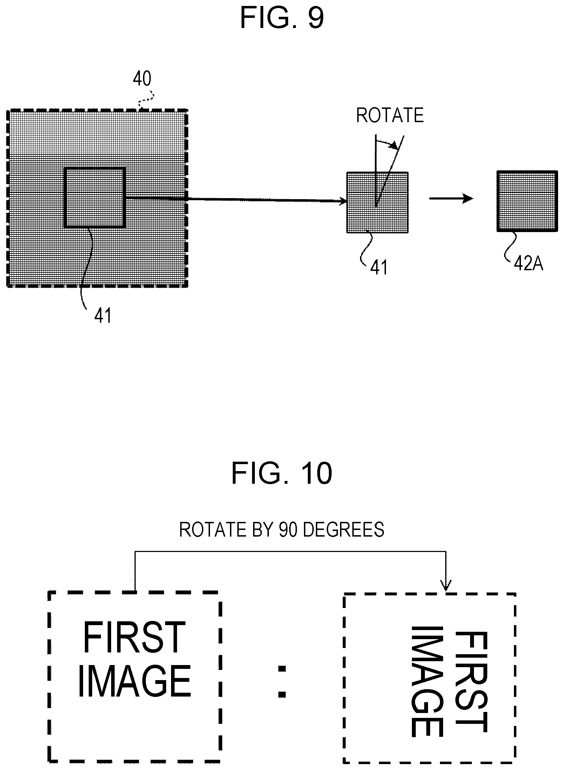

Fig. 9 is a view for explaining a method for acquiring a first region 41 and a second region 42A according to the seventh exemplary embodiment.

As illustrated in Fig. 9, the extraction unit 11B extracts the first region 41 from an object surface image 40. The specifying unit 11C specifies, as the second region 42A, a region obtained by adding predetermined distortion to the first region 41. The predetermined distortion includes, for example, at least one of rotation of the first region 41 by a predetermined angle, mirroring of the first region 41, and filtering of the first region 41. In the example of Fig. 9, a region obtained by rotating (affine transformation) the first region 41 by a predetermined angle is specified as the second region 42A. The predetermined angle is, for example, an angle such as 90 degrees, 180 degrees, or 270 degrees in a clockwise direction about a center of the first region 41. For example, when an image of a random pattern is rotated by a certain angle or more, the rotated image is recognized as a different image. It is therefore desirable to decide an angle by which a rotated image is recognized as a different image in advance by using a simulation image. Note that the angle is desirably decided in accordance with a kind of random pattern since the angle varies depending on the kind of random pattern such as a "satin-finished surface", an "ink printed surface", a "painted surface", or a "paper surface".

Fig. 10 illustrates an example of an image obtained by rotating an image according to the seventh exemplary embodiment. In the example of Fig. 10, an image obtained by rotating an image (first image) of the first region 41, for example, by 90 degrees is illustrated.

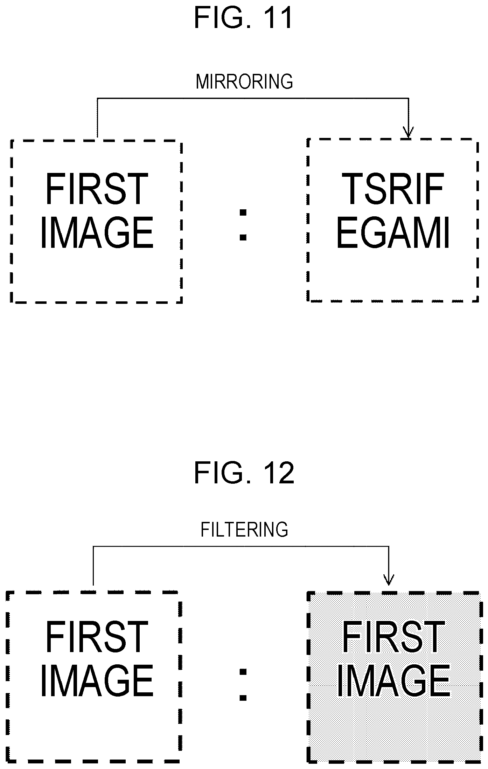

Fig. 11 illustrates an example of an image obtained by mirroring an image according to the seventh exemplary embodiment. In the example of Fig. 11, an image obtained by mirroring an image (first image) of the first region 41 is illustrated.

Fig. 12 illustrates an example of an image obtained by filtering an image according to the seventh exemplary embodiment. In the example of Fig. 12, an image obtained by filtering an image (first image) of the first region 41 is illustrated. The filtering may be high-pass filtering or may be low-pass filtering. In a case where a pixel value of an image of the first region 41 is used as a reference, it is desirable to perform filtering for changing the pixel value within a range of -50% or more and +50% or less (e.g., within a range of 50 or more and 150 or less in a case where the pixel value is 100).

The deriving unit 11D derives a similarity between the first region 41 and the second region 42A. Specifically, for example, a cross-correlation value derived by using the formula (1) or the formula (2) described above is used as the similarity.

The registration unit 11E registers, as a registered image, the image of the first region 41 in a registered image DB 15C in a case where the similarity between the first region 41 and the second region 42A is equal to or less than a threshold value. The image of the first region 41 may be acquired as a comparison image. In the present exemplary embodiment, in a case where the first region 41 and the second region 42A obtained by rotating the first region 41, which are obtained from an identical object (an object 21 to be registered), are not similar, it is regarded that randomness is high, and it is determined that the image of the first region 41 is suitable as a registered image. In a case where plural second regions 42A having different rotation angles are obtained, the image of the first region 41 is registered as a registered image in a case where a similarity to each of the plural second regions 42A is equal to or less than the threshold value. Furthermore, an image of the second region 42A may be registered as a registered image in addition to the image of the first region 41.

As described above, according to the present exemplary embodiment, a registered image is registered by using an image obtained from an object surface image and a rotated image obtained by rotating the image. This reduces man-hours for registration of a registered image as compared with a case where plural images of plural different objects are used.

Eighth Exemplary Embodiment

In an eighth exemplary embodiment, suitability as a registered image is verified by using a data characteristic of a first region in addition to a similarity between the first region and a second region obtained by adding predetermined distortion to the first region.

A CPU 11 of an information processing apparatus (hereinafter referred to as an "information processing apparatus 10G") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10G according to the present exemplary embodiment from the information processing apparatus 10 according to the first exemplary embodiment are described below.

As illustrated in Figs. 8A to 8C, the extraction unit 11B extracts a first region 41 from an object surface image 40. The specifying unit 11C specifies, as a second region 42A, a region obtained by adding predetermined distortion to the first region 41 (e.g., rotating the first region 41 by a predetermined angle).

The deriving unit 11D derives a similarity between the first region 41 and the second region 42A. Specifically, for example, a cross-correlation value derived by using the formula (1) or the formula (2) described above is used as the similarity. The deriving unit 11D derives a characteristic value indicative of a characteristic of the first region 41 from the first region 41, for example, by using the formula (3) or the formula (4) described above.

The registration unit 11E registers, as a registered image, an image of the first region 41 in a registered image DB 15C in a case where the similarity between the first region 41 and the second region 42A is equal to or less than a threshold value and the characteristic value (e.g., a compression rate, Laplacian dispersion, or skewness) of the first region 41 satisfies a predetermined condition. The image of the first region 41 may be acquired as a comparison image.

Note that in a case where plural second regions 42A having different rotation angles are specified, the image of the first region 41 is registered as a registered image in a case where a similarity to each of the plural second regions 42A is equal to or less than the threshold value and the characteristic value satisfies the predetermined condition.

As described above, according to the present exemplary embodiment, an unsuitable image including an out-of-focus part, a streak, a scratch, dust, or the like among images regarded as being suitable as a registered image by using a similarity to a rotated image can be excluded.

Ninth Exemplary Embodiment

In a ninth exemplary embodiment, suitability as a registered image is verified by using features indicative of a degree of distribution of similarities in addition to a similarity between a first region and a second region obtained by adding predetermined distortion to the first region.

A CPU 11 of an information processing apparatus (hereinafter referred to as an "information processing apparatus 10H") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10H according to the present exemplary embodiment from the information processing apparatus 10 according to the first exemplary embodiment are described below.

As illustrated in Fig. 9, the extraction unit 11B extracts a first region 41 from an object surface image 40. The specifying unit 11C specifies, as a second region 42A, a region obtained by rotating the first region 41 by a predetermined angle.

The deriving unit 11D derives a similarity between the first region 41 and the second region 42A. Specifically, for example, a cross-correlation value derived by using the formula (1) or the formula (2) described above is used as the similarity.

As illustrated in Fig. 7A, the extraction unit 11B extracts a third region 43 including the first region 41 from the object surface image 40. As illustrated in Fig. 7B, the specifying unit 11C shifts a region 44 having the same size as the first region 41 in the third region 43 by one pixel at each time in a predetermined direction (a direction from left to right in the example of Fig. 7B) from a start end of the third region 43 until the region 44 moves to a terminal end of the third region 43. As illustrated in Fig. 7C, plural regions 44 thus obtained are specified as plural fourth regions 45. In the example of Fig. 7C, the plural fourth regions 45 are expressed as n regions $f_1, ... f_i, ...,$ and $f_n$.

The deriving unit 11D derives plural similarities between the first region 41 and the plural fourth regions 45 and derives features indicative of a degree of distribution of the similarities obtained for a maximum similarity among the plural similarities thus derived. Specifically, a cross-correlation value derived by using the formula (1) or the formula (2) described above is used as a similarity. In a case where the number of fourth regions 45 is n, n cross-correlation values are obtained. As the features, a normalized score derived by using the formula (5) described above is used, for example.

The registration unit 11E registers, as a registered image, an image of the first region 41 in a registered image DB 15C in a case where a similarity to the second region 42A obtained by adding predetermined distortion to the first region 41 (e.g., rotating the first region 41 by a predetermined angle) is equal to or less than a threshold value and features (e.g., a normalized score) obtained from plural similarities to the plural fourth regions 45 are equal to or more than a certain value. The image of the first region 41 may be acquired as a comparison image.

As described above, according to the present exemplary embodiment, a more suitable image having high randomness among images regarded as being suitable as a registered image by using a similarity to a rotated image can be obtained as a registered image.

Tenth Exemplary Embodiment

In a tenth exemplary embodiment, suitability as a registered image is verified by using a data characteristic of a first region and features indicative of a degree of distribution of similarities in addition to a similarity between the first region and a second region obtained by adding predetermined distortion to the first region.

A CPU 11 of an information processing apparatus (hereinafter referred to as an "information processing apparatus 10J") according to the present exemplary embodiment functions as an acquisition unit 11A, an extraction unit 11B, a specifying unit 11C, a deriving unit 11D, and a registration unit 11E, as with the information processing apparatus 10 described in the first exemplary embodiment. Differences of the information processing apparatus 10J according to the present exemplary embodiment from the information processing apparatus 10 according to the first exemplary embodiment are described below.

As illustrated in Fig. 9, the extraction unit 11B extracts a first region 41 from an object surface image 40. The specifying unit 11C specifies, as a second region 42A, a region obtained by adding predetermined distortion to the first region 41 (e.g., rotating the first region 41 by a predetermined angle).

The deriving unit 11D derives a similarity between the first region 41 and the second region 42A. Specifically, for example, a cross-correlation value derived by using the formula (1) or the formula (2) described above is used as the similarity. The deriving unit 11D derives a characteristic value indicative of a characteristic of the first region 41 from the first region 41, for example, by using the formula (3) or the formula (4) described above.

As illustrated in Fig. 7A, the extraction unit 11B extracts a third region 43 including the first region 41 from the object surface image 40. As illustrated in Fig. 7B, the specifying unit 11C shifts a region 44 having the same size as the first region 41 in the third region 43 by one pixel at each time in a predetermined direction (a direction from left to right in the example of Fig. 7B) from a start end of the third region 43 until the region 44 moves to a terminal end of the third region 43. As illustrated in Fig. 7C, plural regions 44 thus obtained are specified as plural fourth regions 45. In the example of Fig. 7C, the plural fourth regions 45 are expressed as n regions $f_1, ... f_i, ...,$ and $f_n$.

The deriving unit 11D derives plural similarities between the first region 41 and the plural fourth regions 45 and derives features indicative of a degree of distribution of similarities obtained for a maximum similarity among the plural similarities thus derived. Specifically, for example, a cross-correlation value derived by using the formula (1) or the formula (2) described above is used as a similarity. In a case where the number of fourth regions 45 is n, n cross-correlation values are obtained. As the features, a normalized score derived by using the formula (5) described above is used, for example.

The registration unit 11E registers, as a registered image, an image of the first region 41 in a registered image DB 15C in a case where a similarity to the second region 42A obtained by adding predetermined distortion to the first region 41 (e.g., rotating the first region 41 by a predetermined angle) is equal to or less than a threshold value, features (e.g., a normalized score) obtained from plural similarities to the plural fourth regions 45 are equal to or more than a certain value, and a characteristic value (e.g., a compression rate, Laplacian dispersion, or skewness) of the first region 41 satisfies a predetermined condition. The image of the first region 41 may be acquired as a comparison image.

As described above, according to the present exemplary embodiment, an unsuitable image including an out-of-focus part, a streak, a scratch, dust, or the like among images regarded as being suitable as a registered image by using a similarity to a rotated image can be excluded, and a more suitable image of higher randomness can be obtained as a registered image.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The information processing apparatuses according to the exemplary embodiments have been described above. The exemplary embodiments may be programs for causing a computer to execute functions of the information processing apparatuses. The embodiments may be non-transitory computer readable media storing the programs.

Furthermore, although a case where the processing according to the exemplary embodiments is realized by a software configuration by execution of a program by a computer has been described in the above exemplary embodiments, this is not restrictive. The exemplary embodiments may be, for example, realized by a hardware configuration or a combination of a hardware configuration and a software configuration.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

**Claims**

1. An information processing apparatus (10) comprising:
   a processor (11) configured to:

extract a first region showing a feature of an object to be registered and having a predetermined size from an object surface image obtained by imaging a surface of the object;

specify, from the object surface image, a second region to be compared with the first region and having a same size as the first region;

derive a similarity between the first region and the second region; and

**characterized in that** the processor is further configured to:

extract a third region including the first region and having a larger size than the first region from the object surface image;

specify, as a plurality of second regions, a plurality of regions obtained by shifting a region having a same size as the first region in the third region by one pixel at each time in a predetermined direction from a start end of the third region until the region moves to a terminal end of the third region;

derive a plurality of similarities between the first region and the plurality of second regions;

derive features indicative of a degree of distribution of the similarities obtained for a maximum similarity among the plurality of similarities; and

register, as a registered image, the image of the first region in a case where the similarity between the first region and the second region is equal to or less than a threshold value and the features are equal to or more than a certain value; and

wherein the processor is further configured to determine an authenticity of a target object by comparing an image of the target object with the registered image.

2. The information processing apparatus (10) according to Claim 1, wherein:
the processor (11) is configured to:

extract a third region including the first region and having a larger size than the first region from the object surface image;

specify, as the second region, at least a part of the third region other than the first region; and

register, as the registered image, the image of the first region in a case where the similarity between the first region and the second region is equal to or less than a threshold value.

3. The information processing apparatus (10) according to Claim 2, wherein:
the processor (11) is configured to:

derive a characteristic value indicative of a characteristic of the first region from the first region; and

register, as the registered image, the image of the first region in a case where the similarity between the first region and the second region is equal to or less than the threshold value and the characteristic value satisfies a predetermined condition.

4. The information processing apparatus (10) according to Claim 2, wherein:
the processor (11) is configured to:

specify, as a plurality of fourth regions, a plurality of regions obtained by shifting a region having a same size as the first region in the third region by one pixel at each time in a predetermined direction from a start end of the third region until the region moves to a terminal end of the third region;

derive a plurality of similarities between the first region and the plurality of fourth regions;

derive features indicative of a degree of distribution of the similarities obtained for a maximum similarity among the plurality of similarities; and

register, as the registered image, the image of the first region in a case where the similarity between the first region and the second region is equal to or less than the threshold value and the features are equal to or more than a certain value.

5. The information processing apparatus (10) according to Claim 4, wherein:
the processor (11) is configured to:

derive a characteristic value indicative of a characteristic of the first region from the first region; and

register, as the registered image, the image of the first region in a case where the similarity between the first region and the second region is equal to or less than the threshold value, the features are equal to or more than the certain value, and the characteristic value satisfies a predetermined condition.

**6.** The information processing apparatus (10) according to Claim 1, wherein:
the processor is configured to:

derive a characteristic value indicative of a characteristic of the first region from the first region; and
register, as the registered image, the image of the first region in a case where the features are equal to or more than the certain value and the characteristic value satisfies a predetermined condition.

**7.** The information processing apparatus (10) according to Claim 1, wherein:
the processor (11) is configured to:

specify, as the second region, a region obtained by adding predetermined distortion to the first region; and
register, as the registered image, the image of the first region in a case where the similarity between the first region and the second region is equal to or less than a threshold value.

**8.** The information processing apparatus (10) according to Claim 7, wherein:
the predetermined distortion includes at least one of rotation of the first region by a predetermined angle, mirroring of the first region, and filtering of the first region.

**9.** The information processing apparatus (10) according to Claim 7 or 8, wherein:
the processor (11) is configured to:

derive a characteristic value indicative of a characteristic of the first region from the first region; and
register, as the registered image, the image of the first region in a case where the similarity between the first region and the second region is equal to or less than the threshold value and the characteristic value satisfies a predetermined condition.

**10.** The information processing apparatus (10) according to Claim 7 or 8, wherein:
the processor (11) is configured to:

extract a third region including the first region and having a larger size than the first region from the object surface image;
specify, as a plurality of fourth regions, a plurality of regions obtained by shifting a region having a same size as the first region in the third region by one pixel at each time in a predetermined direction from a start end of the third region until the region moves to a terminal end of the third region;
derive a plurality of similarities between the first region and the plurality of fourth regions;
derive features indicative of a degree of distribution of the similarities obtained for a maximum similarity among the plurality of similarities; and
register, as the registered image, the image of the first region in a case where the similarity between the first region and the second region is equal to or less than the threshold value and the features are equal to or more than a certain value.

**11.** The information processing apparatus (10) according to Claim 10, wherein:
the processor (11) is configured to:

derive a characteristic value indicative of a characteristic of the first region from the first region; and
register, as the registered image, the image of the first region in a case where the similarity between the first region and the second region is equal to or less than the threshold value, the features are equal to or more than the certain value, and the characteristic value satisfies a predetermined condition.

**12.** A program (15A) causing a computer to execute a process for information processing, the process comprising:

extracting a first region showing a feature of an object to be registered and having a predetermined size from an object surface image obtained by imaging a surface of the object;
specifying, from the object surface image, a second region to be compared with the first region and having a same size as the first region;
deriving a similarity between the first region and the second region; and
**characterized in that** the processor is further configured to:

extract a third region including the first region and having a larger size than the first region from the object surface image;

specify, as a plurality of second regions, a plurality of regions obtained by shifting a region having a same size as the first region in the third region by one pixel at each time in a predetermined direction from a start end of the third region until the region moves to a terminal end of the third region;

derive a plurality of similarities between the first region and the plurality of second regions;

derive features indicative of a degree of distribution of the similarities obtained for a maximum similarity among the plurality of similarities; and

register, as a registered image, the image of the first region in a case where the similarity between the first region and the second region is equal to or less than a threshold value and the features are equal to or more than a certain value; and

wherein the processor is further configured to determine an authenticity of a target object by comparing an image of the target object with the registered image.

**13.** An information processing method comprising:

extracting (S102) a first region showing a feature of an object to be registered and having a predetermined size from an object surface image obtained by imaging a surface of the object;

specifying (S104), from the object surface image, a second region to be compared with the first region and having a same size as the first region;

deriving (S105) a similarity between the first region and the second region; and

**characterized in that** the processor is further configured to:

extract (S103) a third region including the first region and having a larger size than the first region from the object surface image;

specify, as a plurality of second regions, a plurality of regions obtained by shifting a region having a same size as the first region in the third region by one pixel at each time in a predetermined direction from a start end of the third region until the region moves to a terminal end of the third region;

derive a plurality of similarities between the first region and the plurality of second regions;

derive features indicative of a degree of distribution of the similarities obtained for a maximum similarity among the plurality of similarities; and

register, as a registered image, the image of the first region in a case where the similarity between the first region and the second region is equal to or less than a threshold value and the features are equal to or

more than a certain value; and wherein the processor is further configured to determine an authenticity of a target object by comparing an image of the target object with the registered image.

**Patentansprüche**

**1.** Informationsverarbeitungsvorrichtung (10), Folgendes umfassend:
einen Prozessor (11), der zu Folgendem konfiguriert ist:

Extrahieren eines ersten Bereichs, der ein Merkmal eines zu registrierenden Objekts zeigt und eine vorbestimmte Größe aufweist, aus einem Objektoberflächenbild, das durch Abbilden einer Oberfläche des Objekts erlangt wird;

Festlegen, aus dem Objektoberflächenbild, eines mit dem ersten Bereich zu vergleichenden zweiten Bereichs, der dieselbe Größe wie der erste Bereich aufweist;

Ableiten einer Ähnlichkeit zwischen dem ersten Bereich und dem zweiten Bereich; und

**dadurch gekennzeichnet, dass** der Prozessor ferner zu Folgendem konfiguriert ist:

Extrahieren eines dritten Bereichs, der den ersten Bereich beinhaltet und eine größere Größe als der erste Bereich aufweist, aus dem Objektoberflächenbild;

Festlegen, als eine Vielzahl von zweiten Bereichen, einer Vielzahl von Bereichen, die dadurch erlangt werden, dass ein Bereich, der die gleiche Größe wie der erste Bereich aufweist,

in dem dritten Bereich um jeweils ein Pixel in einer vorbestimmten Richtung von einem Anfangsende des dritten Bereichs verschoben wird, bis sich der Bereich zu einem Abschlussende des dritten Bereichs bewegt;

Ableiten einer Vielzahl von Ähnlichkeiten zwischen dem ersten Bereich und der Vielzahl von zweiten Bereichen;

Ableiten von Merkmalen, die einen Verteilungsgrad der erlangten Ähnlichkeiten für eine maximale Ähnlichkeit aus der Vielzahl von Ähnlichkeiten angeben; und

Registrieren, als ein registriertes Bild, des Bildes des ersten Bereichs, wenn die Ähnlichkeit zwischen dem ersten Bereich und dem zweiten Bereich gleich oder kleiner als ein Schwellenwert ist und die Merkmale gleich oder größer als ein gewisser Wert sind; und

wobei der Prozessor ferner dazu konfiguriert ist, eine Authentizität eines Zielobjekts durch Vergleichen eines Bildes des Zielobjekts mit dem registrierten Bild zu bestimmen.

2. Informationsverarbeitungsvorrichtung (10) nach Anspruch 1, wobei:
der Prozessor (11) zu Folgendem konfiguriert ist:

Extrahieren eines dritten Bereichs, der den ersten Bereich beinhaltet und eine größere Größe als der erste Bereich aufweist, aus dem Objektoberflächenbild;

Festlegen, als den zweiten Bereich, mindestens eines Teils des dritten Bereichs, der von dem ersten Bereich verschieden ist; und

Registrieren, als das registrierte Bild, des Bildes des ersten Bereichs, wenn die Ähnlichkeit zwischen dem ersten Bereich und dem zweiten Bereich gleich oder kleiner als ein Schwellenwert ist.

3. Informationsverarbeitungsvorrichtung (10) nach Anspruch 2, wobei:
der Prozessor (11) zu Folgendem konfiguriert ist:

Ableiten eines charakteristischen Werts, der eine Charakteristik des ersten Bereichs angibt, aus dem ersten Bereich; und

Registrieren, als das registrierte Bild, des Bildes des ersten Bereichs, wenn die Ähnlichkeit zwischen dem ersten Bereich und dem zweiten Bereich gleich oder kleiner als ein Schwellenwert ist und der charakteristische Wert eine vorbestimmte Bedingung erfüllt.

4. Informationsverarbeitungsvorrichtung (10) nach Anspruch 2, wobei:
der Prozessor (11) zu Folgendem konfiguriert ist:

Festlegen, als eine Vielzahl von vierten Bereichen, einer Vielzahl von Bereichen, die dadurch erlangt werden, dass ein Bereich, der die gleiche Größe wie der erste Bereich aufweist, in dem dritten Bereich um jeweils ein Pixel in einer vorbestimmten Richtung von einem Anfangsende des dritten Bereichs verschoben wird, bis sich der Bereich zu einem Abschlussende des dritten Bereichs bewegt;

Ableiten einer Vielzahl von Ähnlichkeiten zwischen dem ersten Bereich und der Vielzahl von vierten Bereichen;

Ableiten von Merkmalen, die einen Verteilungsgrad der erlangten Ähnlichkeiten für eine maximale Ähnlichkeit aus der Vielzahl von Ähnlichkeiten angeben; und

Registrieren, als das registrierte Bild, des Bildes des ersten Bereichs, wenn die Ähnlichkeit zwischen dem ersten Bereich und dem zweiten Bereich gleich oder kleiner als der Schwellenwert ist und die Merkmale gleich oder größer als ein gewisser Wert sind.

5. Informationsverarbeitungsvorrichtung (10) nach Anspruch 4, wobei:
der Prozessor (11) zu Folgendem konfiguriert ist:

Ableiten eines charakteristischen Werts, der eine Charakteristik des ersten Bereichs angibt, aus dem ersten Bereich; und

Registrieren, als das registrierte Bild, des Bildes des ersten Bereichs, wenn die Ähnlichkeit zwischen dem ersten Bereich und dem zweiten Bereich gleich oder kleiner als ein Schwellenwert ist, die Merkmale gleich oder größer als der gewisse Wert sind und der charakteristische Wert eine vorbestimmte Bedingung erfüllt.

6. Informationsverarbeitungsvorrichtung (10) nach Anspruch 1, wobei:
der Prozessor zu Folgendem konfiguriert ist:

Ableiten eines charakteristischen Werts, der eine Charakteristik des ersten Bereichs angibt, aus dem ersten Bereich; und

Registrieren, als das registrierte Bild, des Bildes des ersten Bereichs, wenn die Merkmale gleich oder größer als der gewisse Wert sind und der charakteristische Wert eine vorbestimmte Bedingung erfüllt.

7. Informationsverarbeitungsvorrichtung (10) nach Anspruch 1, wobei:
   der Prozessor (11) zu Folgendem konfiguriert ist:

   Festlegen, als den zweiten Bereich, eines Bereichs, der durch Hinzufügen einer vorbestimmten Verzerrung zu dem ersten Bereich erlangt wird; und
   Registrieren, als das registrierte Bild, des Bildes des ersten Bereichs, wenn die Ähnlichkeit zwischen dem ersten Bereich und dem zweiten Bereich gleich oder kleiner als ein Schwellenwert ist.

8. Informationsverarbeitungsvorrichtung (10) nach Anspruch 7, wobei:
   die vorbestimmte Verzerrung mindestens eines von Drehung des ersten Bereichs um einen vorbestimmten Winkel, Spiegeln des ersten Bereichs und Filtern des ersten Bereichs beinhaltet.

9. Informationsverarbeitungsvorrichtung (10) nach Anspruch 7 oder 8, wobei:
   der Prozessor (11) zu Folgendem konfiguriert ist:

   Ableiten eines charakteristischen Werts, der eine Charakteristik des ersten Bereichs angibt, aus dem ersten Bereich; und
   Registrieren, als das registrierte Bild, des Bildes des ersten Bereichs, wenn die Ähnlichkeit zwischen dem ersten Bereich und dem zweiten Bereich gleich oder kleiner als ein Schwellenwert ist und der charakteristische Wert eine vorbestimmte Bedingung erfüllt.

10. Informationsverarbeitungsvorrichtung (10) nach Anspruch 7 oder 8, wobei:
    der Prozessor (11) zu Folgendem konfiguriert ist:

    Extrahieren eines dritten Bereichs, der den ersten Bereich beinhaltet und eine größere Größe als der erste Bereich aufweist, aus dem Objektoberflächenbild;
    Festlegen, als eine Vielzahl von vierten Bereichen, einer Vielzahl von Bereichen, die dadurch erlangt werden, dass ein Bereich, der die gleiche Größe wie der erste Bereich aufweist, in dem dritten Bereich um jeweils ein Pixel in einer vorbestimmten Richtung von einem Anfangsende des dritten Bereichs verschoben wird, bis sich der Bereich zu einem Abschlussende des dritten Bereichs bewegt;
    Ableiten einer Vielzahl von Ähnlichkeiten zwischen dem ersten Bereich und der Vielzahl von vierten Bereichen;
    Ableiten von Merkmalen, die einen Verteilungsgrad der erlangten Ähnlichkeiten für eine maximale Ähnlichkeit aus der Vielzahl von Ähnlichkeiten angeben; und
    Registrieren, als das registrierte Bild, des Bildes des ersten Bereichs, wenn die Ähnlichkeit zwischen dem ersten Bereich und dem zweiten Bereich gleich oder kleiner als der Schwellenwert ist und die Merkmale gleich oder größer als ein gewisser Wert sind.

11. Informationsverarbeitungsvorrichtung (10) nach Anspruch 10, wobei:
    der Prozessor (11) zu Folgendem konfiguriert ist:

    Ableiten eines charakteristischen Werts, der eine Charakteristik des ersten Bereichs angibt, aus dem ersten Bereich; und
    Registrieren, als das registrierte Bild, des Bildes des ersten Bereichs, wenn die Ähnlichkeit zwischen dem ersten Bereich und dem zweiten Bereich gleich oder kleiner als ein Schwellenwert ist, die Merkmale gleich oder größer als der gewisse Wert sind und der charakteristische Wert eine vorbestimmte Bedingung erfüllt.

12. Programm (15A), das einen Computer veranlasst, einen Prozess zur Informationsverarbeitung auszuführen, wobei der Prozess Folgendes umfasst:

    Extrahieren eines ersten Bereichs, der ein Merkmal eines zu registrierenden Objekts zeigt und eine vorbestimmte Größe aufweist, aus einem Objektoberflächenbild, das durch Abbilden einer Oberfläche des Objekts erlangt wird;
    Festlegen, aus dem Objektoberflächenbild, eines zweiten Bereichs, der mit dem ersten Bereich verglichen werden soll und der dieselbe Größe wie der erste Bereich aufweist;
    Ableiten einer Ähnlichkeit zwischen dem ersten Bereich und dem zweiten Bereich; und
    **dadurch gekennzeichnet, dass** der Prozessor ferner zu Folgendem konfiguriert ist:

    Extrahieren eines dritten Bereichs, der den ersten Bereich beinhaltet und eine größere Größe als der erste Bereich aufweist, aus dem Objektoberflächenbild;

Festlegen, als eine Vielzahl von zweiten Bereichen, einer Vielzahl von Bereichen, die dadurch erlangt werden, dass ein Bereich, der die gleiche Größe wie der erste Bereich aufweist, in dem dritten Bereich um jeweils ein Pixel in einer vorbestimmten Richtung von einem Anfangsende des dritten Bereichs verschoben wird, bis sich der Bereich zu einem Abschlussende des dritten Bereichs bewegt;

Ableiten einer Vielzahl von Ähnlichkeiten zwischen dem ersten Bereich und der Vielzahl von zweiten Bereichen;

Ableiten von Merkmalen, die einen Verteilungsgrad der erlangten Ähnlichkeiten für eine maximale Ähnlichkeit aus der Vielzahl von Ähnlichkeiten angeben; und

Registrieren, als ein registriertes Bild, des Bildes des ersten Bereichs, wenn die Ähnlichkeit zwischen dem ersten Bereich und dem zweiten Bereich gleich oder kleiner als ein Schwellenwert ist und die Merkmale gleich oder größer als ein gewisser Wert sind; und

wobei der Prozessor ferner dazu konfiguriert ist, eine Authentizität eines Zielobjekts durch Vergleichen eines Bildes des Zielobjekts mit dem registrierten Bild zu bestimmen.

13. Informationsverarbeitungsverfahren, Folgendes umfassend:

Extrahieren (S102) eines ersten Bereichs, der ein Merkmal eines zu registrierenden Objekts zeigt und eine vorbestimmte Größe aufweist, aus einem Objektoberflächenbild, das durch Abbilden einer Oberfläche des Objekts erlangt wird;

Festlegen (S104), aus dem Objektoberflächenbild, eines zweiten Bereichs, der mit dem ersten Bereich verglichen werden soll und der dieselbe Größe wie der erste Bereich aufweist;

Ableiten (S105) einer Ähnlichkeit zwischen dem ersten Bereich und dem zweiten Bereich; und

**dadurch gekennzeichnet, dass**

der Prozessor ferner zu Folgendem konfiguriert ist:

Extrahieren (S103) eines dritten Bereichs, der den ersten Bereich beinhaltet und eine größere Größe als der erste Bereich aufweist, aus dem Objektoberflächenbild;

Festlegen, als eine Vielzahl von zweiten Bereichen, einer Vielzahl von Bereichen, die dadurch erlangt werden, dass ein Bereich, der die gleiche Größe wie der erste Bereich aufweist, in dem dritten Bereich um jeweils ein Pixel in einer vorbestimmten Richtung von einem Anfangsende des dritten Bereichs verschoben wird, bis sich der Bereich zu einem Abschlussende des dritten Bereichs bewegt;

Ableiten einer Vielzahl von Ähnlichkeiten zwischen dem ersten Bereich und der Vielzahl von zweiten Bereichen;

Ableiten von Merkmalen, die einen Verteilungsgrad der erlangten Ähnlichkeiten für eine maximale Ähnlichkeit aus der Vielzahl von Ähnlichkeiten angeben; und

Registrieren, als ein registriertes Bild, des Bildes des ersten Bereichs, wenn die Ähnlichkeit zwischen dem ersten Bereich und dem zweiten Bereich gleich oder kleiner als ein Schwellenwert ist und die Merkmale gleich oder größer als ein gewisser Wert sind; und

wobei der Prozessor ferner dazu konfiguriert ist, eine Authentizität eines Zielobjekts durch Vergleichen eines Bildes des Zielobjekts mit dem registrierten Bild zu bestimmen.

## Revendications

1. Appareil de traitement d'informations (10) comprenant :
un processeur (11) configuré pour :

extraire une première région montrant une caractéristique d'un objet à enregistrer et ayant une taille prédéterminée à partir d'une image de surface d'objet obtenue en imageant une surface de l'objet ;

spécifier, à partir de l'image de surface d'objet, une deuxième région à comparer à la première région et ayant une même taille que la première région ;

dériver une similitude entre la première région et la deuxième région ; et

**caractérisé en ce que** le processeur est également configuré pour :

extraire une troisième région comportant la première région et ayant une taille plus grande que la première région à partir de l'image de surface d'objet ;

spécifier, en tant que pluralité de deuxièmes régions, une pluralité de régions obtenues en décalant une région ayant une même taille que la première région dans la troisième région d'un pixel à chaque fois dans

19

une direction prédéterminée à partir d'une extrémité de départ de la troisième région jusqu'à ce que la région se déplace vers une extrémité terminale de la troisième région ;

dériver une pluralité de similitudes entre la première région et la pluralité de deuxièmes régions ;

dériver des caractéristiques indicatives d'un degré de distribution des similitudes obtenues pour une similitude maximale parmi la pluralité de similitudes ; et

enregistrer, en tant qu'image enregistrée, l'image de la première région dans un cas où la similitude entre la première région et la deuxième région est égale ou inférieure à une valeur seuil et les caractéristiques sont égales ou supérieures à une certaine valeur ; et

dans lequel le processeur est également configuré pour déterminer l'authenticité d'un objet cible en comparant une image de l'objet cible avec l'image enregistrée.

**2.** Appareil de traitement d'informations (10) selon la revendication 1, dans lequel :
le processeur (11) est configuré pour :

extraire une troisième région comportant la première région et ayant une taille plus grande que la première région à partir de l'image de surface d'objet ;

spécifier, en tant que deuxième région, au moins une partie de la troisième région autre que la première région ; et

enregistrer, en tant qu'image enregistrée, l'image de la première région dans un cas où la similitude entre la première région et la deuxième région est égale ou inférieure à une valeur seuil.

**3.** Appareil de traitement d'informations (10) selon la revendication 2, dans lequel :
le processeur (11) est configuré pour :

dériver une valeur caractéristique indicative d'une caractéristique de la première région à partir de la première région ; et

enregistrer, en tant qu'image enregistrée, l'image de la première région dans un cas où la similitude entre la première région et la deuxième région est égale ou inférieure à la valeur seuil et la valeur caractéristique satisfait une condition prédéterminée

**4.** Appareil de traitement d'informations (10) selon la revendication 2, dans lequel :
le processeur (11) est configuré pour :

spécifier, en tant que pluralité de quatrièmes régions, une pluralité de régions obtenues en décalant une région ayant une même taille que la première région dans la troisième région d'un pixel à chaque fois dans une direction prédéterminée à partir d'une extrémité de départ de la troisième région jusqu'à ce que la région se déplace vers une extrémité terminale de la troisième région ;

dériver une pluralité de similitudes entre la première région et la pluralité de quatrièmes régions ;

dériver des caractéristiques indicatives d'un degré de distribution des similitudes obtenues pour une similitude maximale parmi la pluralité de similitudes ; et

enregistrer, en tant qu'image enregistrée, l'image de la première région dans un cas où la similitude entre la première région et la deuxième région est égale ou inférieure à la valeur seuil et les caractéristiques sont égales ou supérieures à une certaine valeur.

**5.** Appareil de traitement d'informations (10) selon la revendication 4, dans lequel :
le processeur (11) est configuré pour :

dériver une valeur caractéristique indicative d'une caractéristique de la première région à partir de la première région ; et

enregistrer, en tant qu'image enregistrée, l'image de la première région dans un cas où la similitude entre la première région et la deuxième région est égale ou inférieure à la valeur seuil, les caractéristiques sont égales ou supérieures à la certaine valeur, et la valeur caractéristique satisfait une condition prédéterminée.

**6.** Appareil de traitement d'informations (10) selon la revendication 1, dans lequel :
le processeur est configuré pour :

dériver une valeur caractéristique indicative d'une caractéristique de la première région à partir de la première région ; et

enregistrer, en tant qu'image enregistrée, l'image de la première région dans un cas où les caractéristiques sont égales ou supérieures à la certaine valeur, et la valeur caractéristique satisfait une condition prédéterminée.

7.  Appareil de traitement d'informations (10) selon la revendication 1, dans lequel :
le processeur (11) est configuré pour :

spécifier, en tant que deuxième région, une région obtenue en ajoutant une distorsion prédéterminée à la première région ; et
enregistrer, en tant qu'image enregistrée, l'image de la première région dans un cas où la similitude entre la première région et la deuxième région est égale ou inférieure à une valeur seuil.

8.  Appareil de traitement d'informations (10) selon la revendication 7, dans lequel :
la distorsion prédéterminée comporte au moins l'un de la rotation de la première région selon un angle prédéterminé, de la mise en miroir de la première région et du filtrage de la première région.

9.  Appareil de traitement d'informations (10) selon la revendication 7 ou 8, dans lequel :
le processeur (11) est configuré pour :

dériver une valeur caractéristique indicative d'une caractéristique de la première région à partir de la première région ; et
enregistrer, en tant qu'image enregistrée, l'image de la première région dans un cas où la similitude entre la première région et la deuxième région est égale ou inférieure à la valeur seuil et la valeur caractéristique satisfait une condition prédéterminée.

10.  Appareil de traitement d'informations (10) selon la revendication 7 ou 8, dans lequel :
le processeur (11) est configuré pour :

extraire une troisième région comportant la première région et ayant une taille plus grande que la première région à partir de l'image de surface d'objet ;
spécifier, en tant que pluralité de quatrièmes régions, une pluralité de régions obtenues en décalant une région ayant une même taille que la première région dans la troisième région d'un pixel à chaque fois dans une direction prédéterminée à partir d'une extrémité de départ de la troisième région jusqu'à ce que la région se déplace vers une extrémité terminale de la troisième région ;
dériver une pluralité de similitudes entre la première région et la pluralité de quatrièmes régions ;
dériver des caractéristiques indicatives d'un degré de distribution des similitudes obtenues pour une similitude maximale parmi la pluralité de similitudes ; et
enregistrer, en tant qu'image enregistrée, l'image de la première région dans un cas où la similitude entre la première région et la deuxième région est égale ou inférieure à la valeur seuil et les caractéristiques sont égales ou supérieures à une certaine valeur.

11.  Appareil de traitement d'informations (10) selon la revendication 10, dans lequel :
le processeur (11) est configuré pour :

dériver une valeur caractéristique indicative d'une caractéristique de la première région à partir de la première région ; et
enregistrer, en tant qu'image enregistrée, l'image de la première région dans un cas où la similitude entre la première région et la deuxième région est égale ou inférieure à la valeur seuil, les caractéristiques sont égales ou supérieures à la certaine valeur, et la valeur caractéristique satisfait une condition prédéterminée.

12.  Programme (15A) amenant un ordinateur à exécuter un processus de traitement d'informations, le processus comprenant :

l'extraction d'une première région montrant une caractéristique d'un objet à enregistrer et ayant une taille prédéterminée à partir d'une image de surface d'objet obtenue en imageant une surface de l'objet ;
la spécification, à partir de l'image de surface d'objet, d'une deuxième région à comparer à la première région et ayant une même taille que la première région ;
la dérivation d'une similitude entre la première région et la deuxième région ; et
**caractérisé en ce que** le processeur est également configuré pour :

extraire une troisième région comportant la première région et ayant une taille plus grande que la première région à partir de l'image de surface d'objet ;

spécifier, en tant que pluralité de deuxièmes régions, une pluralité de régions obtenues en décalant une région ayant une même taille que la première région dans la troisième région d'un pixel à chaque fois dans une direction prédéterminée à partir d'une extrémité de départ de la troisième région jusqu'à ce que la région se déplace vers une extrémité terminale de la troisième région ;

dériver une pluralité de similitudes entre la première région et la pluralité de deuxièmes régions ;

dériver des caractéristiques indicatives d'un degré de distribution des similitudes obtenues pour une similitude maximale parmi la pluralité de similitudes ; et

enregistrer, en tant qu'image enregistrée, l'image de la première région dans un cas où la similitude entre la première région et la deuxième région est égale ou inférieure à une valeur seuil et les caractéristiques sont égales ou supérieures à une certaine valeur ; et

dans lequel le processeur est également configuré pour déterminer l'authenticité d'un objet cible en comparant une image de l'objet cible avec l'image enregistrée.

**13.** Procédé de traitement d'informations comprenant :

l'extraction (S102) d'une première région montrant une caractéristique d'un objet à enregistrer et ayant une taille prédéterminée à partir d'une image de surface d'objet obtenue en imageant une surface de l'objet ;

la spécification (S104), à partir de l'image de surface d'objet, d'une deuxième région à comparer à la première région et ayant une même taille que la première région ;

la dérivation (S105) d'une similitude entre la première région et la deuxième région ; et

**caractérisé en ce que** le processeur est également configuré pour :

extraire (S103) une troisième région comportant la première région et ayant une taille plus grande que la première région à partir de l'image de surface d'objet ;

spécifier, en tant que pluralité de deuxièmes régions, une pluralité de régions obtenues en décalant une région ayant une même taille que la première région dans la troisième région d'un pixel à chaque fois dans une direction prédéterminée à partir d'une extrémité de départ de la troisième région jusqu'à ce que la région se déplace vers une extrémité terminale de la troisième région ;

dériver une pluralité de similitudes entre la première région et la pluralité de deuxièmes régions ;

dériver des caractéristiques indicatives d'un degré de distribution des similitudes obtenues pour une similitude maximale parmi la pluralité de similitudes ; et

enregistrer, en tant qu'image enregistrée, l'image de la première région dans un cas où la similitude entre la première région et la deuxième région est égale ou inférieure à une valeur seuil et les caractéristiques sont égales ou supérieures à une certaine valeur ; et

dans lequel le processeur est également configuré pour déterminer l'authenticité d'un objet cible en comparant une image de l'objet cible avec l'image enregistrée.

# FIG. 1

# FIG. 2

INFORMATION PROCESSING APPARATUS — 10

I/O — 14

STORAGE UNIT — 15

INFORMATION PROCESSING PROGRAM — 15A

CPU — 11

ROM — 12

RAM — 13

DISPLAY UNIT — 16

OPERATION UNIT — 17

COMMUNICATION UNIT — 18

# FIG. 3

10

11

| ACQUISITION UNIT | 11A |
| EXTRACTION UNIT | 11B |
| SPECIFYING UNIT | 11C |
| DERIVING UNIT | 11D |
| REGISTRATION UNIT | 11E |

15

STORAGE UNIT

THRESHOLD VALUE DB — 15B

REGISTERED IMAGE DB — 15C

# FIG. 4

# FIG. 5

```
         ┌─────────────┐
         │    START    │
         └─────────────┘
                │
                ▼                        ╭─ S101
┌────────────────────────────────────┐
│     ACQUIRE IMAGE SHOWING           │
│     OBJECT TO BE REGISTERED         │
└────────────────────────────────────┘
                │
                ▼                        ╭─ S102
┌────────────────────────────────────┐
│    EXTRACT FIRST REGION FROM IMAGE  │
└────────────────────────────────────┘
                │
                ▼                        ╭─ S103
┌────────────────────────────────────┐
│    EXTRACT THIRD REGION FROM IMAGE  │
└────────────────────────────────────┘
                │
                ▼                        ╭─ S104
┌────────────────────────────────────┐
│       SPECIFY SECOND REGION         │
│        FROM THIRD REGION            │
└────────────────────────────────────┘
                │
                ▼                        ╭─ S105
┌────────────────────────────────────┐
│         DERIVE SIMILARITY           │
└────────────────────────────────────┘
                │
                ▼                        ╭─ S106
           ◇─────────◇          N
         DOES SIMILARITY ────────┐
         SATISFY PREDETERMINED    │
           STANDARD?              │
           ◇─────────◇            │
                │ Y               │
                ▼        ╭─ S107   │
┌────────────────────────────────────┐
│   REGISTER IMAGE OF FIRST REGION   │
└────────────────────────────────────┘
                │◄───────────────┘
                ▼
         ┌─────────────┐
         │     END     │
         └─────────────┘
```

# FIG. 6

STREAKED

OUT OF FOCUS

# FIG. 7A

# FIG. 7B

# FIG. 7C

# FIG. 8A

# FIG. 8B

START END

44 $f_1$ $f_i$ 43

$f_n$

TERMINAL END

# FIG. 8C

$f_1$ . . . $f_i$ . . . $f_n$

42

FIG. 9

40

41

ROTATE

41

42A

41

FIG. 10

ROTATE BY 90 DEGREES

FIRST IMAGE

:

FIRST IMAGE

# FIG. 11

MIRRORING

FIRST IMAGE : TSRIF EGAMI

# FIG. 12

FILTERING

FIRST IMAGE : FIRST IMAGE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6719723 B
- US 20100328687 A1
- CN 105894046 A
- US 2007115499 A1